# EUROPEAN PATENT APPLICATION

(11) **EP 1 477 885 A1**
(43) Date of publication of application: **17.11.2004**
(21) Application number: 02712379.3
(22) Date of filing: 15.02.2002
(51) Int. Cl.: G06F 3/023

(54) **CHARACTER STRING INPUT DEVICE, CHARACTER STRING INPUT METHOD, CHARACTER STRING INPUT PROGRAM, AND MEDIUM ON WHICH THE PROGRAM IS RECORDED**

(71) Applicant: FUJITSU LIMITED, Kawasaki-shi, Kanagawa 211-8588 (JP)
(72) Inventor: YAMADA, Shigenobu, c/o FUJITSU LIMITED, Kawasaki-shi, Kanagawa 211-8588 (JP)
(74) Representative: Sunderland, James Harry
(86) International application number: PCT/JP2002/001290
(87) International publication number: WO 2003/069459

(57) **Abstract**

In order to easily input a character string such as a command in a computer system by a numeral string, a character string input device inquires a computer system of an inputtable character string and dynamically prepares a conversion table for converting the numeral string into on inputtable character string from the result. When the numeral string is input from an external terminal such as a cellular phone, the character string input device converts the input numeral string into the corresponding character string by using the conversion table and transmits it to the computer system.

## Description

### Technical Field

This invention relates to a character string input technique that is used for remote supervision of a computer system using an external terminal such as a cellular phone or PHS (Personal Handiphone System), and more particularly to a character string input device, a character string input method, a character string input program, and a medium on which the program is recorded in a communication system for remotely supervising a computer system located at a remote site through the Internet, for example.

### Background Art

The remote supervision of a computer system has been conventionally employed, and it is common practice to connect a terminal such as a personal computer (PC) to the telephone line and log in the computer system of supervisory subject through telnet.

The remote supervision of computer system is mostly needed in the case where the system has some faults and it is necessary to survey a situation of the system urgently. The system faults occur at any time. Also, the survey must be performed, wherever the person in charge resides. Accordingly, to perform the remote supervision according to the conventional method, it is always required to carry a terminal such as a personal computer, though it is not light enough to carry, placing a great burden on the person in charge. Also, there is a limitation in that a certain location is required for operation.

Such burden and limitation are solved by making the remote supervision, using a cellular phone having a connection capability to the network such as the Internet. However, the cellular phone has a fatal defect that it is generally difficult to input the character string.

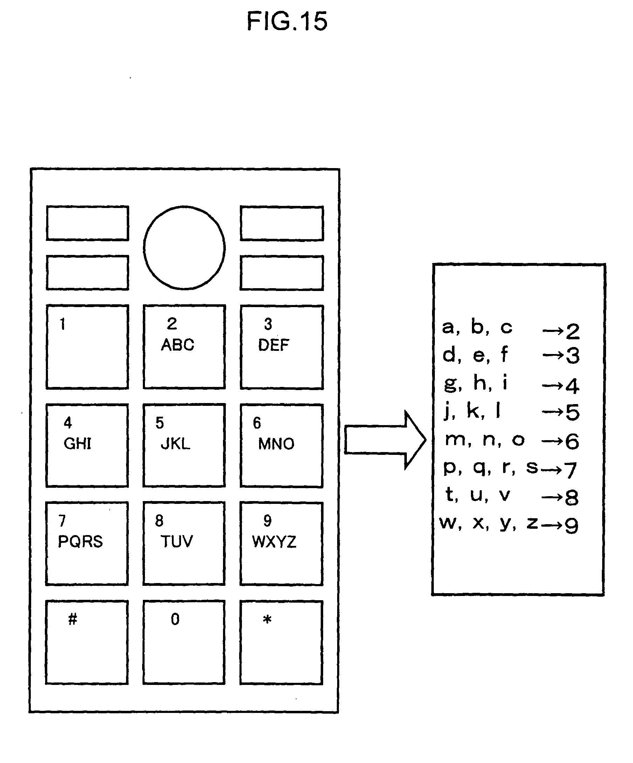

Conventionally, when the characters were input in the cellular phone, the following method was taken. Figure 15 shows the correspondence relation between number and character on a keyboard of the typical cellular phone. As shown in Figure 15, a plurality of characters are allocated to one numeric key. For example, in order to input a character string "mkdir" on this cellular phone, the cellular phone is set in a character input mode, and the numeric keys are depressed in the following way.

6553444777
The keys are depressed as much as 10 times. When the system has a failure to fight the clock, the dull input with the numeric keys only increases the stress.

The present invention has been achieved in the light of this problem, and it is an object of the invention to solve the problem associated with the input operation that is complicated in the remote supervision using an external terminal such as a cellular phone, and provide means for enabling the remote supervision of a computer system any time and anywhere without feeling the stress.

### Disclosure of the Invention

The present invention provides a character string input device for inputting a character string into a computer system, comprising means for acquiring an information list of meaningful character strings inputtable into the computer system, means for preparing a conversion table for converting an input numeral string into each character string inputtable into the computer system, using the information list of character strings, based on the predetermined correspondence information between a plurality of characters and one number, means for inputting the numeral string, and means for converting the input numeral string into the corresponding character string, using the conversion table and transmitting it to the computer system.

More specifically, when the computer system is remotely supervised, for example, the invention prepares a correspondence table between the executable command and the numeral string by checking the executable command for a supervised system, searches the correspondence table based on the numeral string received from an external terminal such as a cellular phone, converts the numeral string into a command candidate character string, and transmits a selected command character string from the external terminal to the supervised system.

With the character string input device of the invention, the conversion table (correspondence table) between the numeral string and the command is dynamically prepared by checking a meaningful character string such as a command inputtable into the computer system, and the input numeral string is converted into the character string such as command, using the conversion table, whereby the character string is easily input from the external terminal simply having the input key such as ten key in accordance with a situation of the computer system. Also, with the character string input device of the invention, the maintenance of the correspondence table (conversion table) between the inputtable character string and the numeral string is unnecessary, even when the inputtable character string is changed over time or with the situation.

A character string input program of the invention is executed on a computer constituting the character string input device, wherein the conversion table between the numeral string and the character string such as command is prepared by checking the character string such as executable command for the computer system, and the input numeral string is converted into the character string such as command, using the conversion table, thereby submitting the character string into the computer system. This program may be stored and provided in a recording medium such as CD-ROM, CD-R/W, or flexible disk. Accordingly, the character string input device is easily realized.

Thereby, the user who is engaged in remotely supervising the computer system from the external terminal such as cellular phone can input the character string such as command into the computer system simply using the relatively short numeral string.

### Brief Description of the Drawings

Figures 1 and 2 are diagrams for explaining the outline and action of the present invention;
Figure 3 is a diagram showing the outline of a system for inputting a character string from an external terminal into a computer system;
Figure 4 is a diagram showing a configuration of a character string input device;
Figure 5 is a detailed block diagram of a command input device as one example of the character string input device;
Figures 6 to 8 are the processing flowcharts of the command input device;
Figures 9 and 10 are diagrams showing an operation example in a case of inputting a command "clear" using the command input device;
Figures 11 to 14 are diagrams showing an operation example in a case of inputting a command "cat" using the command input device; and
Figure 15 is a diagram showing the correspondence relation between number and character on a keyboard of the typical cellular phone.

### Best Mode for Carrying Out the Invention

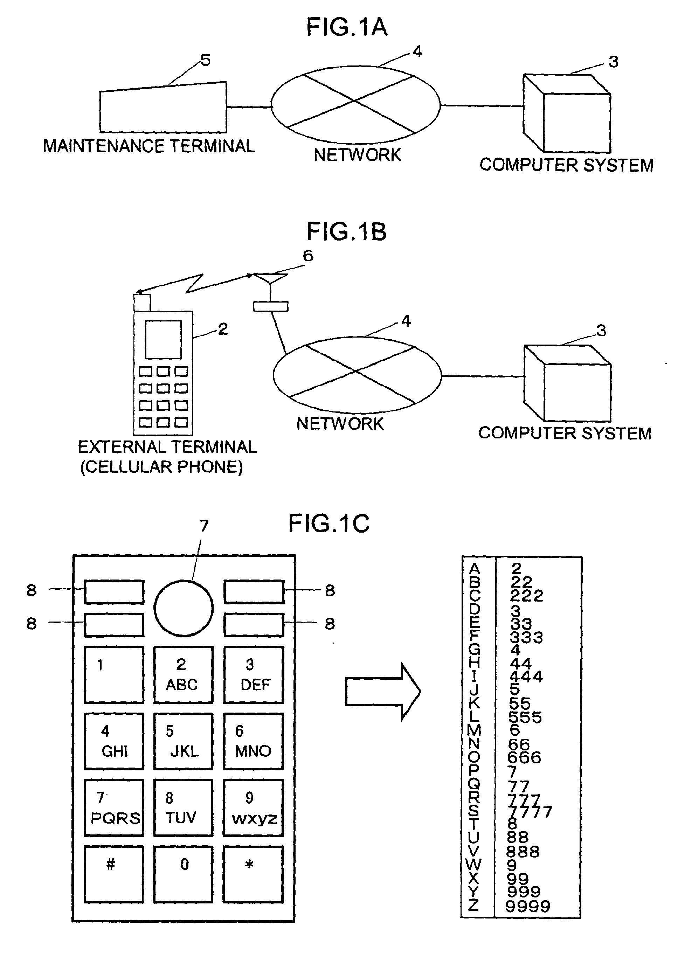

The present invention involves the remote supervision of a computer system by inputting a command simply using the ten-key. For example, it is practiced that a computer system 3 is supervised via a network 4 from a maintenance terminal 5, as shown in Figure 1A. When the computer system 3 is supervised from an external terminal 2 such as a cellular phone via the network 4 connected to a radio base station 6, as shown in Figure 1B, it is required that a command is input from a keyboard as shown in Figure 1C.

Figure 1C shows a keyboard of the typical cellular phone. In addition to the four-row and three-column ten key (including 0 to 9, # and *), a cursor movement key 7 and the function key 8 useful for mode switching are usually provided above the ten key. One number and a plurality of alphabets or kana characters are allocated to each numeric key, and used by switching an input mode. In Figure 1C, the indication of kana is omitted for simplification.

In this example, three alphabets A, B and C are allocated to the numeric key "2". To input "C" on the keyboard, the input mode is switched into an alphabet input mode using the function key, and the key "2" is depressed three time such as "222". To input a small character "c", it is required to depress the key "2" six times such as "222222". When no distinction is made between the large character and the small character, this is not the case. For simplicity, the large character and the small character are not distinguished in the following.

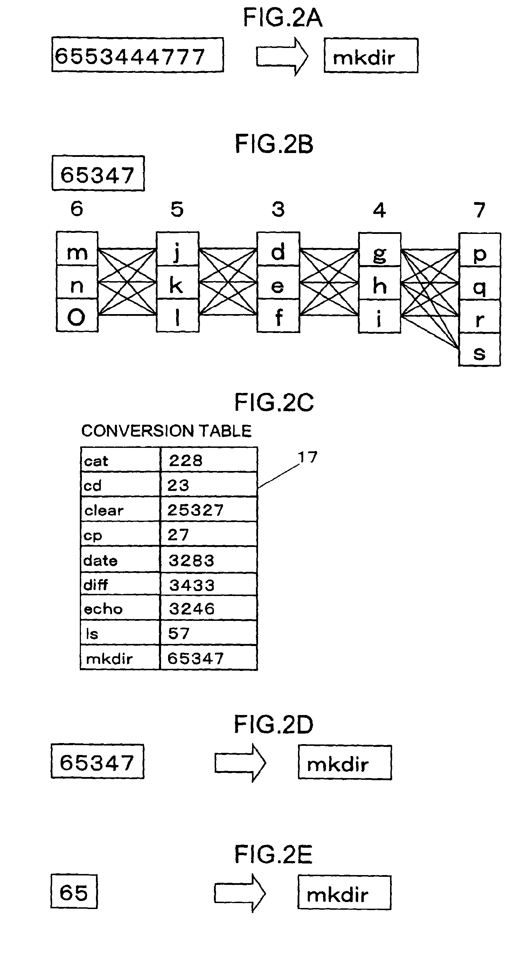

In the case where a command character string such as "mkdir" is input from the keyboard, it is required to input a numeral string of "6553444777", as shown in Figure 2A.

In inputting the character string using the numeric keys for the cellular phone, a technique for reducing the number of depressing the numeric key is conventionally well known. For example, a numerical information address input device as described in Japanese Patent Laid-Open No. 10-83241, a one-to-one correspondence table between the numeral string and the URL address is prepared to associate a numeral string with the URL (Uniform Resource Locator), the URL address is obtained by matching an input numeral string with the table.

Consider that a method for use with this numerical information address input device is applied to a case as shown in Figure 1B. In this case, an input method is as follows. To input a command character string of "mkdir", instead of inputting a numeral string "6553444777", a numeral string "65347" is input, as shown in Figure 2B. Thereby, the character string as input candidate is possible in 3x3x3x3x4 combinations of characters, and any one of 324 character strings as follows.
mjdgp, mjdgq, .., mjdgs, mjdhp, .., mlfis,
njdgp, njdgq, .., njdgs, njdhp, .., nlfis,
ojdgp, ojdgq, .., ojdgs, ojdhp, .., olfis

The command character strings practically acceptable to the computer system 3 are selected from among these 324 character strings, and dealt with as the input character strings.

A method for selecting the command character strings acceptable to the computer system 3 involves preparing a conversion table 17 between numeral string and command, as shown in Figure 2C. Using this conversion table 17, the numeral string "65347" can be converted into the command character string "mkdir", as shown in Figure 2D.

Moreover, if the command character string "mkdir" alone corresponds to the numeral string beginning with "65", the command character string "mkdir" can be input only by inputting the numeral string "65", as shown in Figure 2E. Thereby, with the conventional method, the character string "mkdir" can be input only by inputting five numbers "65347" or two numbers "65" for the input of ten numbers of "6553444777".

When this method is employed, it is required to prepare the conversion table 17 storing the correspondence information between the command character string inputtable to the computer system 3 and the numeral string, as shown in Figure 2C. When the number of inputtable character strings is small, and prefixed, this conversion table 17 is easily prepared. However, when the number of inputtable character strings is large, there is a problem that the size of the conversion table 17 is increased.

Also, the computer system 3 of supervisory object mounts a specific operation system (OS), the conversion table 17 can be prepared in advance, but there is a problem that it is not possible to cope with a plurality of different operating systems.

Moreover, when the inputtable character string such as file name is not decided in advance, for example, there is another problem that the conversion table 17 can not be prepared.

This invention has means for dynamically preparing the conversion table 17 through the communication with the computer system 3, thereby allowing for the input of character strings of commands from the ten key simply.

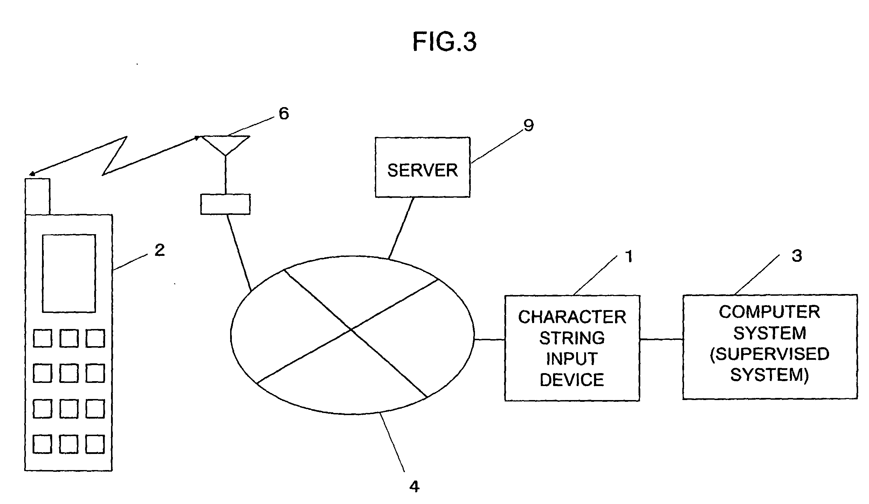

Figure 3 is a diagram showing the outline of a system for inputting a character string from an external terminal into the computer system. The external terminal 2 such as cellular phone allowing for the use of the Internet is connected via an antenna of a radio base station 6 to a network 4. A server 9 of a carrier with which the owner of the external terminal 2 contracts and the character string input device 1 for converting the numeral string input from the external terminal 2 into the character string are connected to the network 4. Also, the computer system (supervised system) 3 subjected to remote supervision is connected to the character string input device 1.

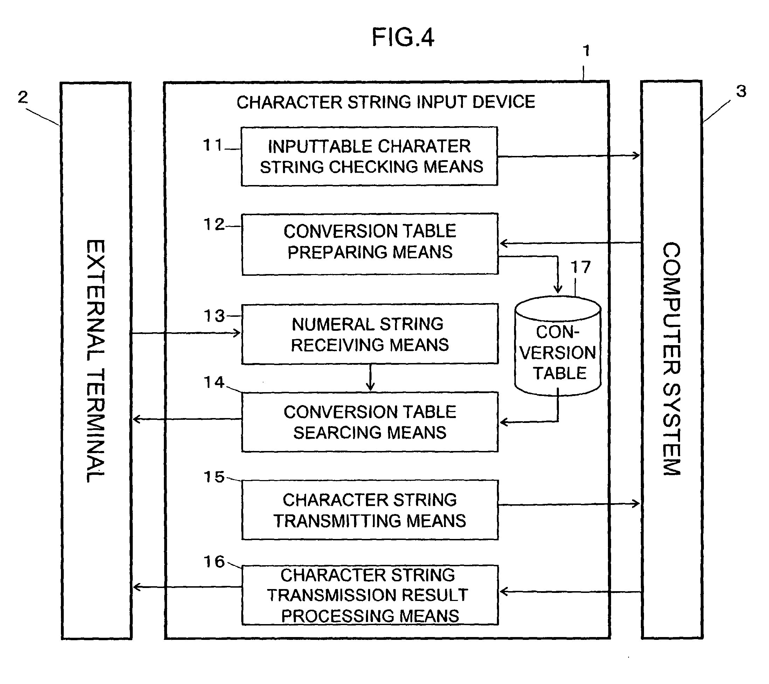

Figure 4 shows a basic configuration of the character string input device as shown in Figure 3. The character string input device 1 comprises inputtable character string checking means 11, conversion table preparing means 12, numeral string receiving means 13, conversion table searching means 14, character string transmitting means 15, and character string transmission result processing means 16.

The inputtable character string checking means 11 is means for inquiring the computer system 3 of an inputtable character string such as an executable command, and checking the inputtable character string to the computer system 3. The conversion table preparing means 12 is means for preparing the conversion table 17 having the correspondence information between numeral string and inputtable character string, based on an information list of inputtable character strings transferred from the computer system 3.

The numeral string receiving means 13 is means for recognizing a numeral string input from the keyboard of the external terminal 2, and passing it to the conversion table searching means 14. The conversion table searching means 14 is means for searching the conversion table 17 and converting the input numeral string into the character string such as a command candidate.

The character string transmitting means 15 is means for transmitting the character string such as command to the computer system 3. Also, the character string transmission result processing means 16 is means for receiving and processing the information regarding the execution result from the computer system 3.

The operation of the character string input device 1 as shown in Figure 4 is as follows. The inputtable character string checking means 11 inquiries the computer system 3 of an inputtable character string such as an executable command. If an information list of inputtable character string is received from the computer system 3, the conversion table preparing means 12 prepares the conversion table 17, as shown in Figure 2C.

If the numeral string receiving means 13 receives a numeral string input from the keyboard of the external terminal 2, the conversion table searching means 14 searches the conversion table 17, whereby the input numeral string is converted into the inputtable character string to the corresponding computer system 3.

The character string transmitting means 15 transmits the inputtable character string of conversion result to the computer system 3. If there is a response from the computer system 3, the character string transmission result processing means 16 receives the response. The character string transmission result processing means 16 forwards the response to the external terminal 2, if needed. Also, the character string transmission result processing means 16 updates the conversion table 17 in accordance with the response from the computer system 3, if it is necessary to update it. When the inputtable character string is changed in accordance with a situation, it is required to update the conversion table.

In the above manner, the character string input device 1 enables the inputtable character string checking means 11 to inquire the computer system 3 of the inputtable character string, and the conversion table preparing means 12 to automatically prepare (or update) the conversion table 17, whereby it is unnecessary to prepare the conversion table 17 storing all the inputtable character strings. Also, it is unnecessary to make the periodical maintenance of the conversion table 17. Moreover, it is generally possible to cope with various computer systems 3 having different inputtable character strings.

The inputtable character strings may include the commands of the computer system 3 and operands of the command. However, the invention is applicable to any meaningful character strings recognizable by the computer system 3, besides the commands or command operands.

An example in which the command and the command operand are character strings of input object will be described below in detail.

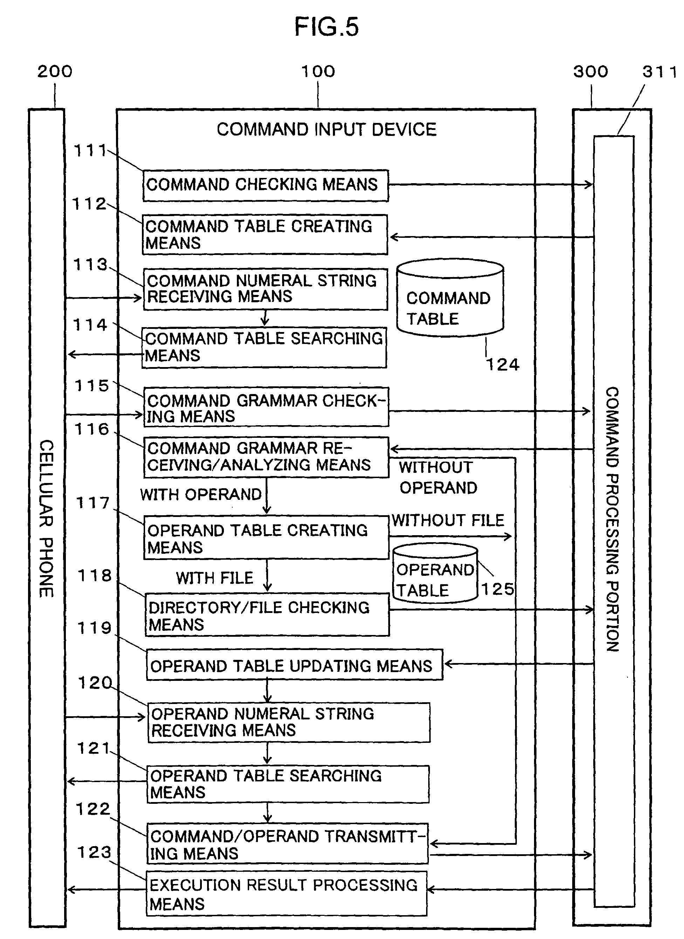

Figure 5 is a detailed block diagram of a command input device as one example of the character string input device. In Figure 5, a command input device 100 corresponds to the character string input device 1 as shown in Figure 4, a cellular terminal 200 corresponds to the external terminal 2, and a supervised system 300 corresponds to the computer system 3. The supervised system 300 mounts a UNIX operating system. A command processing portion 311 is processing means for inputting the command character string and analyzing the command to be executed.

Also, command checking means 111, command grammar checking means 115, command grammar receiving/analyzing means 116, and directory/file checking means 118 correspond to the inputtable character string checking means 11 as shown in Figure 4, command table creating means 112, operand table creating means 117, and operand table updating means 119 correspond to the conversion table preparing means 12, command numeral string receiving means 113 and operand numeral string receiving means 120 correspond to the numeral string receiving means 13, command table searching means 114 and operand table searching means 121 correspond to the conversion table searching means 14, command/operand transmitting means 122 corresponds to the character string transmitting means 15, and execution result processing means 123 corresponds to the character string transmission result processing means 16. Also, a command table 124 and an operand table 125 correspond to the conversion table 17.

The operation of each unit will be now described. The command input device 100 connected from the cellular phone 200 enables the command checking means 111 to inquire the supervised system 300 of an executable command, and check the command. Then, the command table creating means 112 creates the command table 124, based on an information list of commands obtained from the supervised system 300.

The command numeral string receiving means 113 receives a numeral string input from the cellular phone 200, and passes it to the command table searching means 114. The command table searching means 114 searches the command table 124, converts the input numeral string to command candidate character string, and requests the cellular phone 200 to input a choice. If one command is specified by inputting a choice from the cellular phone 200, the command grammar checking means 115 checks the grammar of the command for the supervised system 300.

The command grammar receiving/analyzing means 116 receives and analyzes the grammar of the command transmitted from the supervised system 300. As a result of analysis, if it is checked that there is no operand, the command/operand transmitting means 122 transmits the command to the supervised system 300.

As a result of analysis of the command grammar, if it is judged that there is any operand, the operand table creating means 117 creates the operand table 125. Herein, if there is no specified file in the operand, the command /operand transmitting means 122 transmits the command and operand to the supervised system 300. If there is any specified file in the operand, the directory/file checking means 118 transmits a command for acquiring a file list to the supervised system 300. The operand table updating means 119 receives the file list from the supervised system 300, and updates the operand table 125.

Then, the operand numeral string receiving means 120 receives the operand numeral string input from the cellular phone 200, and passes it to the operand table searching means 121. The operand table searching means 121 searches the operand command table 125, converts the input numeral string into the operand candidate character string, and requests the cellular phone 200 to input a choice.

If one operand is specified by inputting a choice from the cellular phone 200, the command/operand transmitting means 122 assembles the character string composed of the command and the operand, and transmits it to the supervised system 300. If the execution result is sent from the supervised system 300, the execution result processing means 123 transfers its execution result to the cellular phone 200.

Each of the above means may be implemented by the computer and the software program. The software program may be stored in an appropriate recording medium readable by the computer, such as a flexible disk, a CD-ROM, other portable medium memory, a semiconductor memory, or a hard disk.

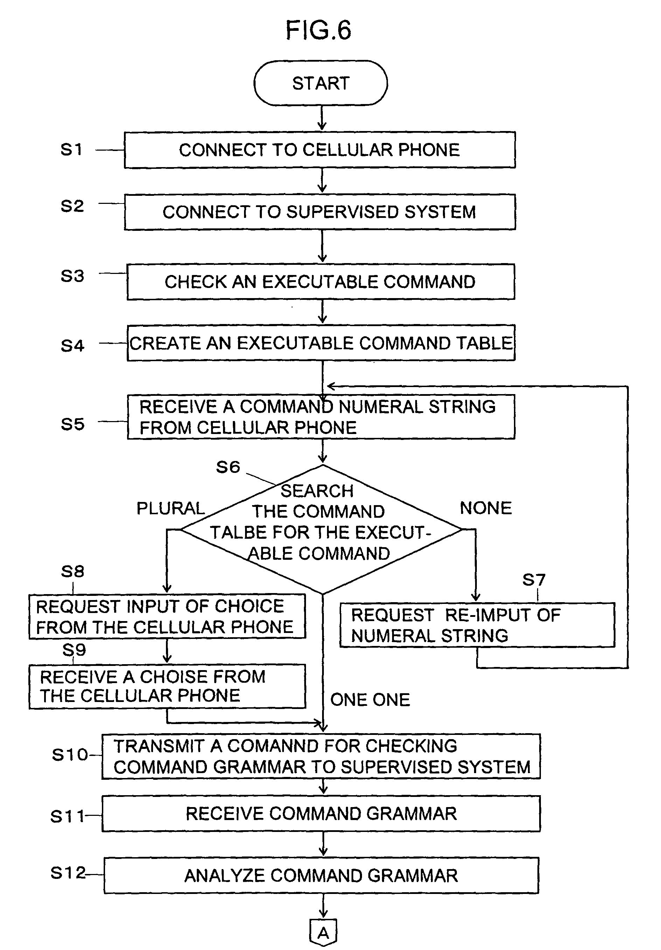

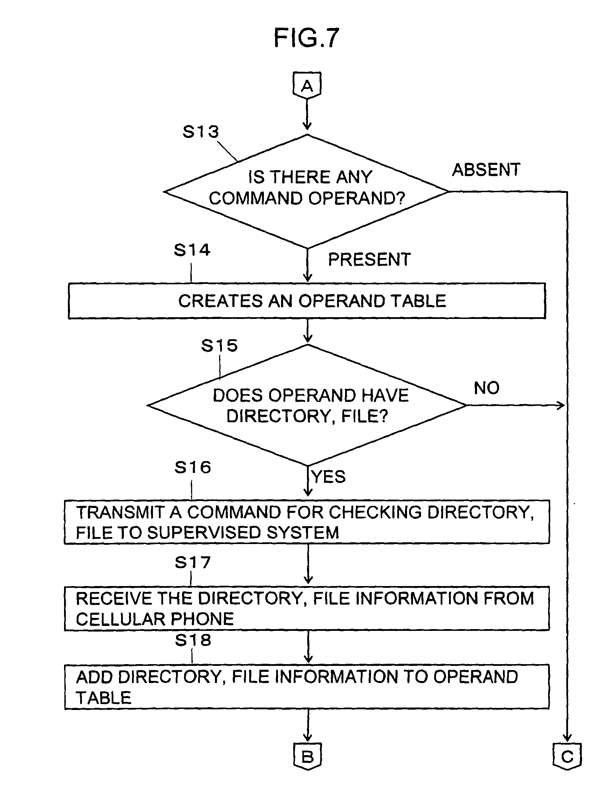

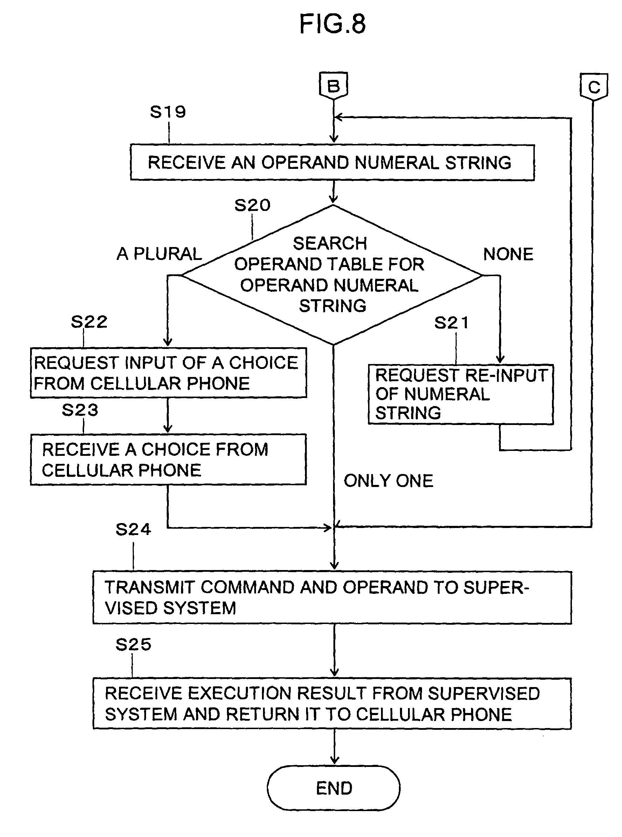

Figures 6 to 8 are processing flowcharts of the command input device 100. A processing flow of the command input device 100 will be described below in accordance with the steps S1 to S25 as shown in Figures 6 to 8.

The command input device 100 is connected to the cellular phone 200 upon a connection request from the cellular phone 200 (step S1), and then connects to the supervised system 300 (step S2).

Then, the command input device 100 issues an inquiry command for the executable command to the supervised system 300, and checks the executable command (step S3).

If an information list of executable commands is received from the supervised system 300, the command input device 100 creates the command table 124 consisting of a list of correspondence information between the numeral string corresponding to the executable command and the command, based on its information (step S4).

If the command numeral string is received from the cellular phone 200 (step S5), the command input device 100 searches the command table 124 for the executable command corresponding to the command numeral string (step S6).

If there is no command candidate corresponding to the numeral string received from the cellular phone 200 in the command table 124, re-input of the numeral string is requested from the cellular phone 200 (step S7).

If there are a plurality of command candidates corresponding to the numeral string received from the cellular phone 200, the command input device 100 requests choice input from the cellular phone 200 (step S8).

If a choice is received from the cellular phone 200 (step S9), or there is only one command candidate, the command input device 100 transmits a command for checking the command grammar (command syntax) of the command to the supervised system 300 (step S10).

If the command grammar is received from the supervised system 300 (step S11), the command input device 100 analyzes the command grammar (step S12), and checks the presence or absence of the command operand (step S13). As a result, if there is no command operand, the command is transmitted to the supervised system 300 (step S24).

If there is any command operand, the command input device 100 creates the operand table 125 (step S14).

Then, it is checked whether or not the operand has any directory and file (step S15). If the operand has no directory and file, the command and operand are transmitted to the supervised system 300 (step S24).

If the operand has any directory and file, a command for checking the directory and file is transmitted to the supervised system 300 (step S16).

The command input device 100 receives the directory and file information from the supervised system 300 (step S17), and the directory and file information is added to the operand table 125 (step S18).

Then, the operand numeral string is received from the cellular phone 200 (step S19), and the operand table 125 is searched for the received operand numeral string (step S20). If there is no operand candidate character string corresponding to the operand table 125, re-input of the numeral string is requested from the cellular phone 200 (step S21).

If there are a plurality of corresponding operand candidate character strings, the command input device 100 requests input of a choice from the cellular phone 200 (step S22).

If the choice is received from the cellular phone 200 (step S23), or there is only one operand candidate character string corresponding to the input operand numeral string, the command input device 100 transmits a combination of the command and the operand to the supervised system 300 (step S24).

Lastly, the command input device 100 receives the execution result from the supervised system 300, and returns it to the cellular phone 200 (step S25).

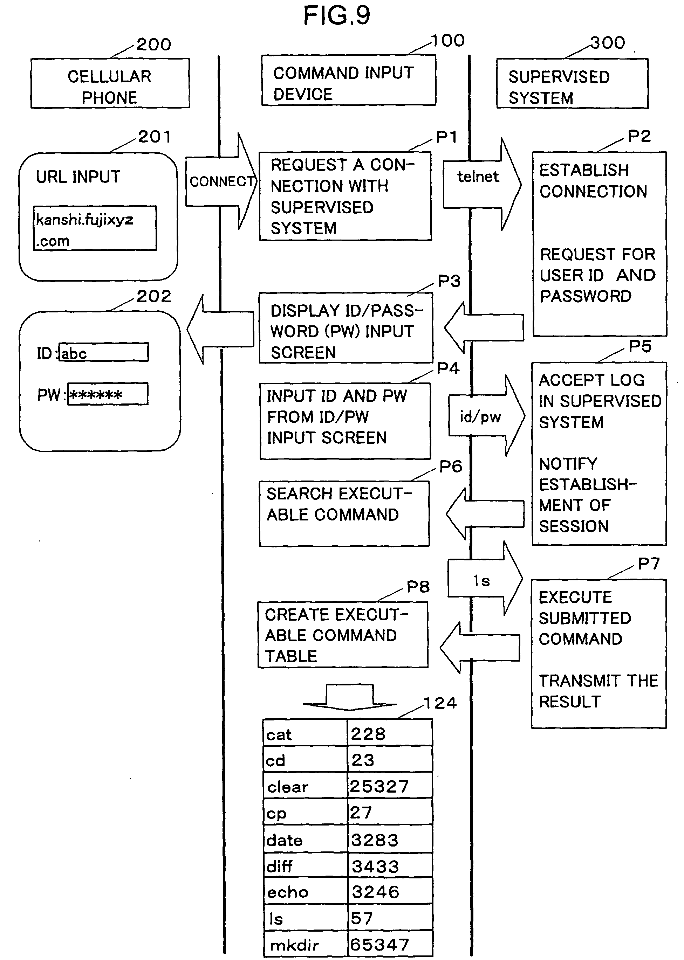

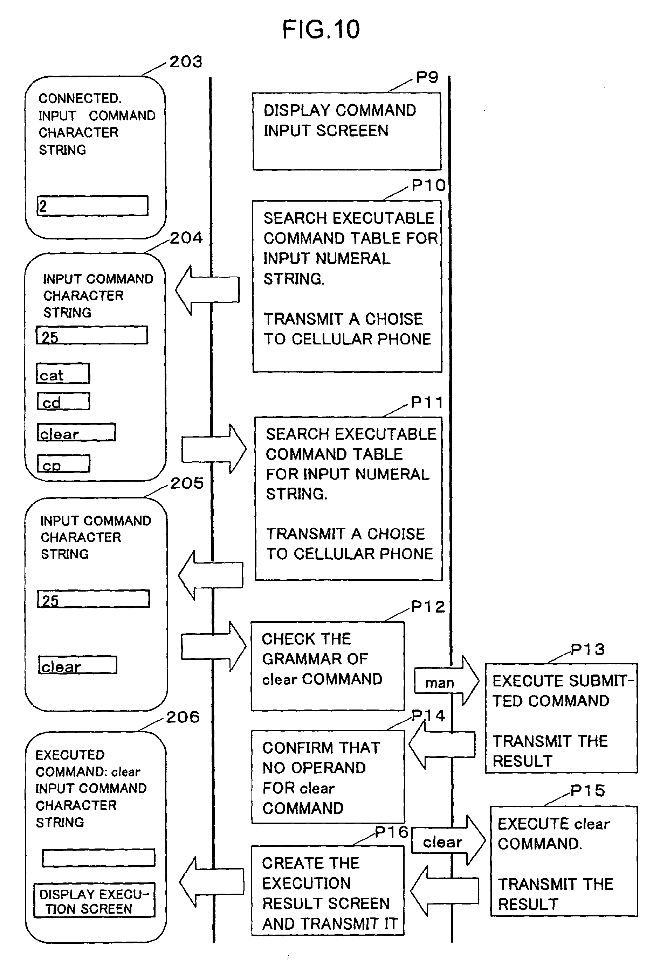

Referring to Figures 9 and 10, a specific input example of the command in the system as shown in Figure 5 will be described below. In this input example, command "clear" is input via the command input device 100 from the cellular phone 200.

The maintenance person in charge for the supervised system 300 inputs a URL for submitting the command into the supervised system 300, using a URL input screen 201 for the cellular phone 200, so that the cellular phone 200 is connected to the command input device 100. The command input device 100 having a connection established by the URL input from the cellular phone 200 requests a connection with the supervised system 300 over telnet (P1), and establishes the connection to the supervised system 300. The supervised system 300 transmits a request of user identification information (called ID) and password to the command input device 100 with the established connection (P2).

The command input device 100 displays an ID/password input screen 202 on the cellular phone 200, based on an ID/password request from the supervised system 300 (P3). If an ID/password is input from the cellular phone 200, the command input device 100 transmits it to the supervised system 300 (P4), and logs in the supervised system 300. The supervised system 300 accepts the log-in from the command input device 100, and notifies the establishment of session (P5).

Then, the command input device 100 submits a 1s command for displaying the command list to the supervised system 300 to search the executable command (P6). The 1s command is one of the commands in the UNIX system to inquire the executable command or instruct to list up the file name.

On the other hand, the supervised system 300 executes the 1s command, and transmits a command information list of the execution result to the command input device 100 (P7).

The command input device 100 creates the command table 124, based on the transmission information from the supervised system 300 (P8). The command table 124 indicating the executable command represents the correspondence relation between the command name of the executable command and the numeral string, and conforms to the correspondence relation between number and character on the keyboard of the typical cellular phone as shown in Figure 15.

Then, the command input device 100 displays a command input screen 203 on the cellular phone 200, and requests input of a command character string (P9).

Herein, the numeral string "2" (one number is regarded as the numeral string for the explanation sake) corresponding to "c" of the clear command is input from the cellular phone 200. The command input device 100 receiving the numeral string "2" input from the keyboard of the cellular phone 200 searches the command table 124 for the input numeral string, and transmits a choice of the command beginning with the numeral string "2" to the cellular phone 200 (P10). In this case, the cellular phone 200 displays four command candidate character strings "cat", "cd", "clear" and "cp".

Subsequently, if the numeral string "5" corresponding to the clear command "1" is input so that the command input screen 204 may be displayed in the cellular phone 200, the command input device 100 searches the command table 124 for the input numeral string "25", and transmits a choice of the corresponding command to the cellular phone 200 (P11). In this example, the corresponding command is one command "clear", whereby the clear command is selected on the input screen 205.

Instead of additionally inputting the number "5" corresponding to character "l" to make one choice, the user may select the command character string "clear" by moving the cursor on the command input screen 204 for the cellular phone 200.

The command input device 100 submits a man command with "clear" as the operand to the supervised system 300 to check the grammar of the clear command for the supervised system 300 (P12). The man command inquires the syntax of the command specified in the operand.

The supervised system 300 executes the submitted "man clear" command and transmits the execution result to the command input device 100 (P13). Herein, the supervised system 300 notifies that there is no operand in the clear command from the syntax of the clear command.

The command input device 100 confirms that there is no operand in the clear command based on the transmission information from the supervised system 300, and then transmits the command character string "clear" to the supervised system 300 to submit the clear command into the supervised system (P14).

The supervised system 300 executes the submitted clear command, and transmits the execution result to the command input device 100 (P15).

Lastly, the command input device 100 creates an execution result screen 206, and transmits it to the cellular phone 200 (P16).

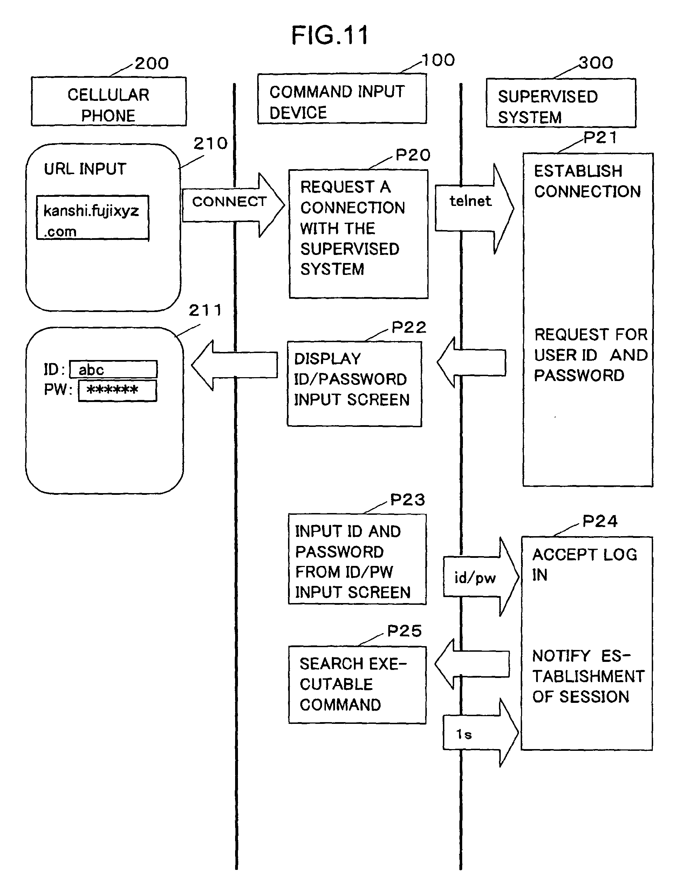

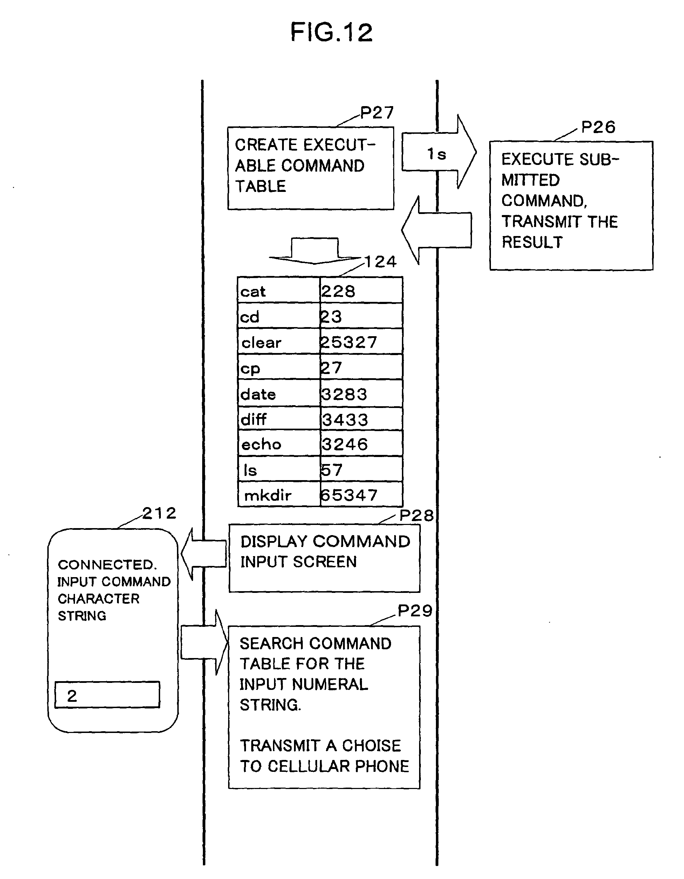

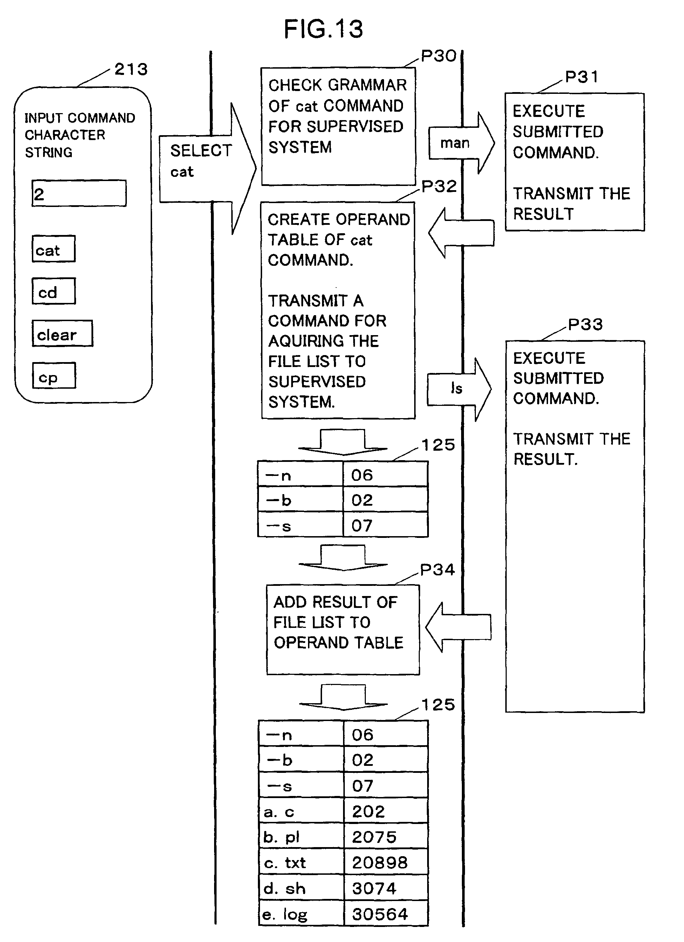

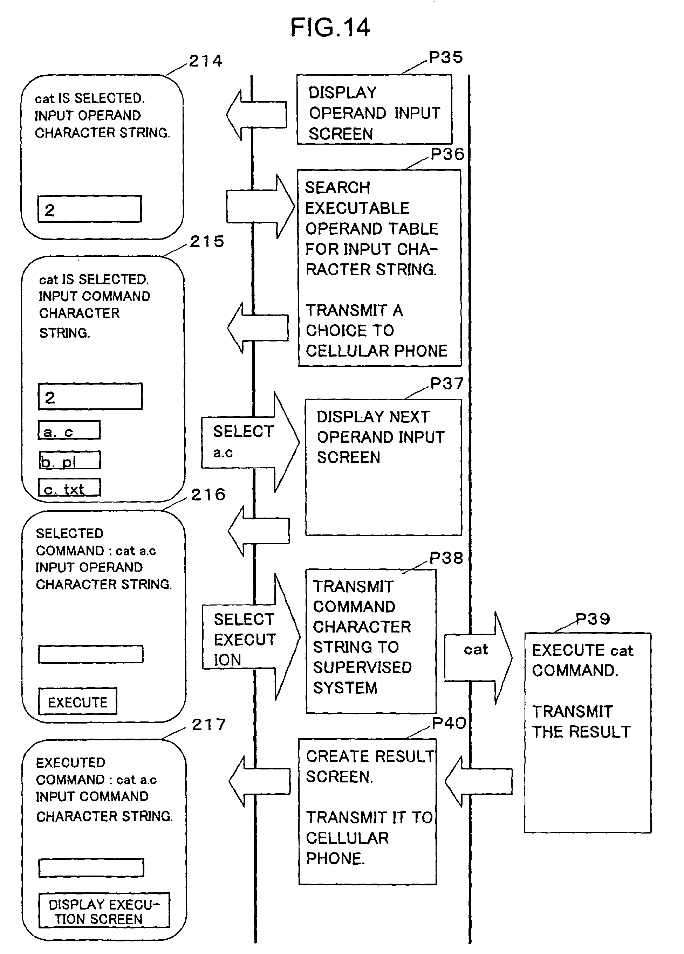

Referring to Figures 11 to 14, an input example of the command having the operand will be now described. In this input example, a command "cat" is input from the cellular phone 200 via the command input device 100 into the supervised system 300.

The maintenance person in charge for the supervised system 300 inputs a URL for submitting the command into the supervised system 300, using a URL input screen 210 for the cellular phone 200, so that the cellular phone 200 is connected to the command input device 100. The command input device 100 having a connection established by the URL input from the cellular phone 200 requests a connection with the supervised system 300 over telnet (P20), and establishes the connection to the supervised system 300. The supervised system 300 transmits a request of ID and password to the command input device 100 with the established connection (P21).

The command input device 100 displays an ID/password input screen 211 on the cellular phone 200, based on an ID/password request from the supervised system 300 (P22). If an ID/password is input from the cellular phone 200, the command input device 100 transmits it to the supervised system 300 (P23), and makes a log-in to the supervised system 300. The supervised system 300 accepts the log-in from the command input device 100, and notifies the establishment of session (P24).

Then, the command input device 100 submits a 1s command for displaying the command list to the supervised system 300 to search the executable command (P25). On the other hand, the supervised system 300 executes the 1s command, and transmits a command information list of the execution result to the command input device 100 (P26).

The command input device 100 creates the command table 124, based on the transmission information from the supervised system 300 (P27).

Then, the command input device 100 displays a command input screen 212 on the cellular phone 200, and requests input of a command character string (P28).

Herein, the numeral string "2" corresponding to "c" of the "cat" command is input from the cellular phone 200. The command input device 100 receiving the numeral string "2" input from the keyboard of the cellular phone 200 searches the command table 124 for the input numeral string, and transmits a choice of the command beginning with the numeral string "2" to the cellular phone 200 (P29). In this case, the cellular phone 200 displays four command candidate character strings "cat", "cd", "clear" and "cp" on the command input screen 213.

Then, in the cellular phone 20, the user selects the command character string "cat" by moving the cursor for the cellular phone 200, its transmission information being transmitted to the command input device 100. Then, the command input device 100 transmits a command character string "man cat" to the supervised system 300 to check the grammar of the "cat" command in the supervised system 300 (P30).

The supervised system 300 executes the input man command and transmits the execution result to the command input device 100 (P31).

The command input device 100 confirms that there is any operand (including option) in the cat command based on the transmission information from the supervised system 300, and creates the operand table 125 of the cat command. Furthermore, the command input device 100 confirms that there is any file in the operand, and transmits an ls command to the supervised system 300 for acquiring the file list (P32).

The supervised system 300 executes the submitted 1s command, and transmits the information list of file name to the command input device 100 (P33). The command input device 100 adds the result of the file list received from the supervised system 300 to the operand table 125 (P34). As a result, the file names "a.c", "b.pl", .., "e.log" are registered in the operand table 125, in addition to the command options "-n", "-b" and "-s".

Then, the command input device 100 displays an operand input screen 214 on the cellular phone 200 (P35). Herein, the numeral string "2" corresponding to "a" of the operand character string "a. c" is input from the keyboard of the cellular phone 200. If the numeral string "2" is received, the command input device 100 searches the operand table 125 for the input numeral string, and transmits a choice of the operand beginning with the numeral string "2" to the cellular phone 200 (P36). In this case, three operand candidate character strings "a. c", "b. pl" and "c. txt" are displayed on an operand input screen 215.

Then, the operand character string "a. c" is selected by moving the cursor on the cellular phone 200, and the selection information is transmitted to the command input device 100.

The command input device 100 receiving the operand selection information displays a next operand input screen 216 on the cellular phone 200 (P37). On this screen 216, "cat a. c" indicating the selected command and operand and an "execution" button are displayed.

If "execution" is selected on the cellular phone 200 and transmitted to the command input device 100, the command input device 100 generates a command character string "cat a. c" by combining the command "cat" and the operand "a. c", and transmits it to the supervised system 300 (P38). The supervised system 300 executes the transmitted "cat" command and transmits the result to the command input device 100 (P39).

Lastly, the command input device 100 creates an execution result screen 217, and transmits it to the cellular phone 200 to display it on the cellular phone 200 (P40).

In the above explanation of the embodiment, the character string input device 1 of Figures 3 and 4 resides independently of the external terminal 2 and the computer system 3, and is connected via the network 4 to them, but the functions of the character string input device 1 may be incorporated into the external terminal 2, or mounted within the computer system 3 other than incorporated into the external terminal 2.

### Industrial Applicability

As described above, with this invention, the conversion table between the numeral string and the character string such as command is dynamically prepared by checking the meaningful character string such as command inputtable into the computer system, and the input numeral string is converted into the character string such as command, using the conversion table, whereby the character string is easily input from the external terminal simply having the input key such as ten key in accordance with a situation of the computer system. Also, with the character string input device of the invention, the maintenance of the correspondence table (conversion table) between the inputtable character string and the numeral string is unnecessary, even when the inputtable character string is changed over time or with the situation.

Particularly in the case where the computer system is remotely supervised by the cellular phone, the correspondence table between the executable command character string or operand character string and the numeral string is dynamically prepared by checking the executable command or its operand for the computer system of supervisory subject, whereby the command or its command operand is easily input in accordance with a situation of the system from the cellular phone.

## Claims

1. A character string input device for inputting a character string into a computer system, comprising:
means for acquiring an information list of meaningful character strings inputtable into said computer system;
means for preparing a conversion table for converting an input numeral string into each character string inputtable into said computer system, using said acquired information list of character strings, based on the predetermined correspondence information between a plurality of characters and one number;
means for inputting the numeral string; and
means for converting the input numeral string into the corresponding character string, using said conversion table and transmitting said character string to said computer system.

2. A character string input method for inputting a character string into a computer system, comprising:
a step of acquiring an information list of meaningful character strings inputtable into said computer system;
a step of preparing a conversion table for converting an input numeral string into each character string inputtable into said computer system, using said acquired information list of character strings, based on the predetermined correspondence information between a plurality of characters and one number;
a step of inputting the numeral string; and
a step of converting the input numeral string into the corresponding character string, using said conversion table and transmitting said character string to said computer system.

3. The character string input method according to claim 2, wherein the meaningful character string inputtable into said computer system is character string constituting a command or command operand for operating said computer system, and said input numeral string is numeral string input using the ten key of an external terminal.

4. A character string input program for enabling a computer to perform a character string input method for inputting a character string into a computer system, said method comprising:
a step of acquiring an information list of meaningful character strings inputtable into said computer system;
a step of preparing a conversion table for converting an input numeral string into each character string inputtable into said computer system, using said acquired information list of character strings, based on the predetermined correspondence information between a plurality of characters and one number;
a step of inputting the numeral string; and
a step of converting the input numeral string into the corresponding character string, using said conversion table and transmitting said character string to said computer system.

5. A computer readable recording medium recording a character string input program for enabling a computer to perform a character string input method for inputting a character string into a computer system, said method comprising:
a step of acquiring an information list of meaningful character strings inputtable into said computer system;
a step of preparing a conversion table for converting an input numeral string into each character string inputtable into said computer system, using said acquired information list of character strings, based on the predetermined correspondence information between a plurality of characters and one number;
a step of inputting the numeral string; and
a step of converting the input numeral string into the corresponding character string, using said conversion table and transmitting said character string to said computer system.
